(19) Europäisches Patentamt
European Patent Office
Office européen des brevets

(11) EP 4 467 335 A1

(12) EUROPÄISCHE PATENTANMELDUNG

(43) Veröffentlichungstag:
27.11.2024 Patentblatt 2024/48

(21) Anmeldenummer: 24175139.5

(22) Anmeldetag: 10.05.2024

(51) Internationale Patentklassifikation (IPC):
B32B 17/10 (2006.01)   C03C 3/091 (2006.01)
C03C 17/04 (2006.01)   C03C 8/14 (2006.01)
B60J 1/02 (2006.01)

(52) Gemeinsame Patentklassifikation (CPC):
B32B 17/10036; B32B 1/00; B32B 7/022;
B32B 7/12; B32B 17/10119; B32B 17/10266;
B32B 17/10348; B32B 17/10761; B32B 17/10935;
B32B 27/30; B60J 1/02; C03C 3/066; C03C 3/091;
C03C 3/093; C03C 3/11;          (Forts.)

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(30) Priorität: 23.05.2023   DE 102023113419

(71) Anmelder:
• SCHOTT AG
55122 Mainz (DE)

• SCHOTT Technical Glass Solutions GmbH
07745 Jena (DE)

(72) Erfinder:
• ZACHAU, Thilo
07745 Jena (DE)
• MENKE-BERG, Yvonne
55122 Mainz (DE)
• WIESEKE, Hubert
07745 Jena (DE)

(74) Vertreter: Schott Corporate IP
Hattenbergstraße 10
55122 Mainz (DE)

(54) **VERBUNDGLAS, INSBESONDERE FÜR EIN FAHRZEUG**

(57) Die Erfindung betrifft allgemein ein Verbundglas, insbesondere für ein Fahrzeug. Im Speziellen betrifft die Erfindung ein Verbundglas, beispielsweise für ein Fahrzeug, welches beispielsweise für den Einsatz als Windschutzscheibe geeignet ist und eine besonders gute Festigkeit sowie eine sehr gute Bedienersicherheit aufweist.

Fig. 3

EP 4 467 335 A1

(52) Gemeinsame Patentklassifikation (CPC): (Forts.)
**C03C 8/04; C03C 8/14; C03C 17/007;**
B32B 2307/4023; B32B 2307/41; B32B 2307/412;
B32B 2307/558; B32B 2307/584; B32B 2307/714;
B32B 2307/7376; B32B 2605/08; C03C 2217/425;
C03C 2217/452; C03C 2217/485

**Beschreibung**

Gebiet der Erfindung

Die Erfindung betrifft allgemein ein Verbundglas, insbesondere für ein Fahrzeug. Im Speziellen betrifft die Erfindung ein Verbundglas, beispielsweise für ein Fahrzeug, welches beispielsweise für den Einsatz als Windschutzscheibe geeignet ist und eine besonders gute Festigkeit sowie eine sehr gute Bedienersicherheit aufweist.

Hintergrund der Erfindung

Verbundgläser werden beispielsweise für Fahrzeugverglasungen gewählt, insbesondere in besonders kritischen Bereichen wie der Windschutzscheibe. Verbundgläser umfassen in der Regel wenigstens zwei Glasscheiben, welche durch eine polymerische Lage, die zwischen den Scheiben angeordnet ist, miteinander verbunden werden. Kommt es aufgrund von mechanischer Einwirkung zum Bruch, hält die polymerische Lage, die beispielsweise als Folie ausgebildet sein kann, die Bruchstücke der Glasscheiben aneinander, sodass Verletzungen der Fahrzeuginsassen durch Glasbruch vermindert werden.

Da solche Fahrzeugscheiben abrasiven Bedingungen, nämlich durch bei hoher Geschwindigkeit auf sie auftreffende Teilchen (beispielsweise auch dem bekannten "Steinschlag") ausgesetzt sind, kann es vorteilhaft sein, als äußere Glasscheibe dieses Scheibenverbundes eine Scheibe umfassend ein Glas mit den Komponenten $SiO_2$ und $B_2O_3$ vorzusehen. Ein solches Glas wird im Rahmen der vorliegenden Offenbarung auch allgemein als Borosilikatglas bezeichnet. Solche Gläser weisen bekanntermaßen eine gute Kratzbeständigkeit auf sowie eine Reihe weiterer Vorteile wie eine allgemein gute mechanische und thermische Beständigkeit.

Es ist bekannt, in der Außenverglasung von Fahrzeugen beispielsweise Borosilikatglas, wie es beispielsweise unter dem Handelsnamen Borofloat ® kommerziell erhältlich ist, einzusetzen. Ein solches Glas ist beispielsweise sehr gut geeignet für Laminatverglasungen und zeichnet sich durch eine sehr hohe Transmission im Bereich des sichtbaren Lichts aus. Weiterhin verfügen Borosilikatgläser allgemein über eine sehr gute Wärmebeständigkeit, eine hohe chemische Beständigkeit und eine gute mechanische Festigkeit.

Beispielsweise beschreibt die internationale Patentanmeldung WO 2015/059406 A laminierte Glasscheiben. Eine dieser Scheiben kann beispielsweise ein Borosilikatglas umfassen, beispielsweise die äußere Scheibe.

Die internationale Patentanmeldung WO 2017/157660 A1 beschreibt eine Verbundglasscheibe für ein Head-Up-Display. Auch hier kann eine der Scheiben des Verbundglases Borosilikatglas umfassen.

Die CO 2017/0005596 A1 beschreibt ebenfalls eine Autoglasscheibe mit hoher Beständigkeit.

Die internationale Patentanmeldung WO 2019/130285 A1 beschreibt ein Laminat mit hoher Beständigkeit gegen Abrasion und Umwelteinflüsse.

Schließlich beschreibt die internationale Patentanmeldung WO 2018/122769 A1 ein Laminat mit hoher Bruchfestigkeit.

Wie ausgeführt, sind Windschutzscheiben zur Sicherheit der Fahrzeuginsassen als Verbundglasscheiben ausgebildet. Auch weisen sie im Randbereich üblicherweise eine Beschichtung auf. Diese Beschichtung dient zum einen der optischen Kaschierung beispielsweise von Verklebungen oder Komponenten, wie beispielsweise Antennen, zum anderen auch deren Schutz vor UV-Strahlung. In der Regel ist diese Beschichtung, welche also beispielsweise in Form eines Rahmens angeordnet sein kann, zwischen den beiden Glasscheiben eines Verbundes angeordnet. Der Verbund umfasst ferner, wie ebenfalls vorstehend bereits ausgeführt, noch eine polymerische, somit eine ein Polymer umfassende oder aus einem Polymer bestehende Lage zwischen den beiden Glasscheiben, welche die Glasscheiben miteinander verbindet. Die Glasscheiben mit der zwischen ihnen angeordneten Beschichtung in wenigstens einem Bereich, insbesondere im Randbereich, werden häufig aufeinander gelegt und in einem thermischen Umformungsprozess gebogen. Allgemein, ohne Beschränkung auf dieses hier beschriebene Beispiel, ist es aber auch möglich, dass die Umformung der Glasscheiben eines Verbundes auch einzeln und getrennt voneinander vorgenommen werden. Anschließend wird eine polymerische Lage zwischen beide Scheiben gebracht und die gebogenen Glasscheiben miteinander verbunden, sodass schließlich eine Verbundglasscheibe erhalten wird. Im Rahmen der vorliegenden Offenbarung wird eine solche Verbundglasscheibe auch vereinfacht als "Verbundglas" bezeichnet. Synonym können für solche Verbundgläser auch die Begriffe "Glasverbund" oder "Verbund" verwendet werden.

An Glasscheiben, welche von einem solchen Verbund umfasst sind, werden daher eine Reihe von Anforderungen gestellt. Da die Biegeprozesse thermisch erfolgen, müssen die Glasscheiben und die darauf aufgebrachte Beschichtung diesen Temperaturen gewachsen sein. Die Glasscheiben und die Beschichtung müssen mit der polymerischen Lage eine Verbindung in der Form eingehen können, dass ein stabiler Verbund gebildet wird und es nicht zu Delaminationen zwischen Glas und Polymer kommt. Schließlich ist es erforderlich, dass die Beschichtung eine ausreichende optische Dichtigkeit aufweist, damit Komponenten, die im Rahmenbereich der Windschutzscheibe angeordnet sind, nicht störend sichtbar sind. Dies verhindert eine Ablenkung des Fahrzeugführers und erhöht so die Fahrsicherheit.

Auch Mikrorisse oder sonstige Defekte der Beschichtung sind nach Möglichkeit zu vermeiden oder mindestens zu minimieren.

Neben der Temperaturbeständigkeit von Glas und Beschichtung, der angesprochenen Kompatibilität von Glas bzw. Beschichtung mit einem polymerischen Material zur Bildung eines Verbundes, der optischen Dichte und der Minimierung möglicher Defekte und allgemein der mechanischen Festigkeit der einzelnen Glasscheiben (hier insbesondere der beschichteten Glasscheibe) ist es besonders wichtig, dass die Beschichtung bevorzugt gleichmäßig, bevorzugt schwarz bzw. dunkel, ausgebildet ist. Bei Beschichtungen auf Glasscheiben, auch im Rahmen von Verbundglasscheiben, ist allgemein bekannt, dass sie, gerade in dem Fall, dass sie besonders haftfest sind, die Festigkeit einer Glasscheibe beinträchtigen können - und damit auch letztlich die Festigkeit des resultierenden Glasverbundes. Schwierigkeiten bestehen auch darin, dass einerseits besonders haftfeste Schichten wünschenswert sind, um zu verhindern, dass es zu Schichtdelaminationen kommt, andererseits gerade diese haftfesten Schichten die Glasfestigkeit herabsetzen.

Um eine gute mechanische Beständigkeit der Glasscheibe und des resultierenden Verbundes zu realisieren, können solche Schichten beispielsweise porös ausgebildet sein oder anstelle eines glasbasierten Bindemittels ein Sol-Gel-Bindemittel aufweisen. Das Herabsetzen der Festigkeit durch eine Schicht oder mehrere Schichten beruht nämlich mit einiger Sicherheit teilweise auf dem Bilden einer sogenannten "Anschmelz-Reaktionszone", welche bei der Verwendung üblicher glasbasierter Beschichtungen resultiert. Zum anderen kommt es aber auch durch die Ausbildung sehr dichter Schichten zu einer Herabsetzung der Festigkeit, wenn die thermische Dehnung der Schicht und des Substrats stark unterschiedlich ist. Dies kann beispielsweise durch eine poröse Ausbildung der Beschichtung vermindert werden. Dies kann beispielsweise mit der Verwendung eines Sol-Gel-Bindemittels erfolgen, bei welcher auch eine sogenannte Anschmelz-Reaktionszone nicht ausgebildet wird - was ebenfalls vorteilhaft für die Festigkeit ist.

Nachteilig an einer porösen Ausbildung einer Beschichtung und/oder der der Verwendung eines Sol-Gel-Bindemittels ist allerdings, dass auf diese Weise bislang keine besonders guten Glasverbunde herstellbar waren. Denn der Glasverbund entsteht, wie vorstehend ausgeführt, durch das Laminieren der wenigstens zwei Scheiben des Verbundes mittels einer polymerischen Lage. Je nach der Zusammensetzung eines Sol-Gel-Bindemittels kann die Kompatibilität mit einem Polymer verringert sein, sodass kein stabiler Verbund gerade im Bereich der Beschichtung möglich ist. Poröse Beschichtungen können weiterhin entweder nicht ausreichend haftfest sein oder zu einem sehr unruhigen, fleckigen Erscheinungsbild der Beschichtung führen, was kritisch für die Sicherheit des Fahrzeugführers sein kann, da ein unruhiges Erscheinungsbild den Fahrzeugführer ablenken kann.

Es besteht damit ein Bedarf an Verbundgläsern, welche die vorgenannten Schwächen des Standes der Technik zumindest mildern.

Aufgabe der Erfindung

Die Aufgabe der Erfindung betrifft die Bereitstellung eines Verbundglases, welches die Schwächen des Standes der Technik zumindest teilweise mindert.

Zusammenfassung der Erfindung

Die Aufgabe der Erfindung wird gelöst durch den Gegenstand der unabhängigen Ansprüche. Vorteilhafte, bevorzugte und spezielle Ausführungsformen finden sich in den abhängigen Ansprüchen, der Beschreibung und der Zeichnungen der vorliegenden Offenbarung.

Die Erfindung betrifft daher allgemein ein Verbundglas, insbesondere für ein Fahrzeug, welche i zwei Glasscheiben umfasst, wobei wenigstens eine Glasscheibe eine bereichsweise beschichtete Glasscheibe umfassend ein Glas umfassend $SiO_2$ und $B_2O_3$ ist, die eine erste und eine zweite Seite aufweist.

Wenigstens in wenigstens einem Bereich der zweiten Seite der wenigstens einen Glasscheibe ist wenigstens eine Beschichtung aufgetragen.

Die wenigstens eine Beschichtung ist als Emaillebeschichtung umfassend wenigstens ein Pigment, einen glasigen Bestandteil und vorzugsweise wenigstens einen Zusatzstoff ausgebildet. Der Zusatzstoff kann insbesondere als Füllstoff ausgebildet sein.

Die wenigstens eine Beschichtung umfasst Poren, vorzugsweise offene Poren, sodass in der wenigstens einen Beschichtung vorzugsweise eine direkte Verbindung zwischen einer der zweiten Seite der wenigstens einen Glasscheibe zugewandten Seite der wenigstens einen Beschichtung und einer der zweiten Seite der wenigstens einen Glasscheibe abgewandten Seite der wenigstens einen Beschichtung resultieren.

Vorzugsweise weist die wenigstens eine Glasscheibe eine Biegefestigkeit zwischen wenigstens 5 und höchstens 170 MPa, bevorzugt wenigstens 20 und höchstens 170 MPa, besonders bevorzugt wenigstens 35 MPa, ganz besonders bevorzugt wenigstens 60 MPa, und am meisten bevorzugt wenigstens 80 MPa, auf.

Das Verbundglas umfasst weiter wenigstens eine zwischen den Glasscheiben angeordnete polymerische Lage, wobei ein Polymer der polymerischen Lage ungefärbt vorliegt, und wobei im Bereich der wenigstens einen Beschichtung zumindest ein Teil der polymerischen Lage die Poren der wenigstens einen Beschichtung zumindest teilweise ausfüllt.

Somit resultiert ein Farbort des Verbundglases, gegeben im CIEL*a*b*-System, bestimmt in Betrachtungsrichtung von der ersten zur zweiten Seite der wenigstens einen Glasscheibe in dem wenigstens einen Bereich, in dem auf der zweiten Seite der wenigstens einen Glasscheibe die erste Beschichtung aufgetragen ist, wobei L* höchstens 12 ist und vorzugsweise wenigstens 1, und A* und b* jeweils im Bereich zwischen +5 und -5 liegen. Mit anderen Worten wird der Farbort also durch die Glasscheibe hindurch gemessen bzw. bestimmt.

Im Rahmen der vorliegenden Offenbarung gelten die folgenden Definitionen:

Unter einem Verbundglas wird allgemein ein Verbund umfassend wenigstens zwei Glasscheiben verstanden, welche mittels einer Zwischenlage fest miteinander verbunden sind. Ein Verbundglas kann allgemein auch als "Verbund", "Scheibenverbund", "Glasverbund", "Verbundglasscheibe" o.ä. bezeichnet werden.

Unter einer Scheibe wird allgemein ein Formkörper verstanden, dessen laterale Abmessung in einer ersten Raumrichtung eines kartesischen Koordinatensystems wenigstens eine Größenordnung geringer ist als die lateralen Abmessungen in den beiden weiteren, zur ersten Raumrichtungen senkrechten, Raumrichtungen. Diese laterale Abmessung entlang der ersten Raumrichtung kann allgemein auch als "Dicke" der Scheibe bezeichnet werden, die beiden anderen lateralen Abmessungen als "Länge" und "Breite". Mit anderen Worten ist bei einer Scheibe im Sinne der vorliegenden Offenbarung die Dicke wenigstens eine Größenordnung geringer als deren Länge und Breite. Länge und Breite der Scheibe können im Rahmen der vorliegenden Offenbarung in derselben Größenordnung liegen oder die Länge der Scheibe kann deutlich größer sein als die Breite. Mithin umfasst eine Scheibe im Sinne der vorliegenden Offenbarung auch eine Ausgestaltung als Band.

Unter einer Glasscheibe wird allgemein verstanden, dass die Scheibe ein Glas umfasst, beispielsweise aus Glas ausgebildet ist. Eine Glasscheibe kann allgemein beschichtet vorliegen, also als beschichtete Glasscheibe ausgebildet sind.

Unter den Seiten einer Glasscheibe wird im Rahmen der vorliegenden Offenbarung eine Hauptfläche oder Hauptoberfläche verstanden. Wie vorstehend ausgeführt, ist eine Scheibe ein Formkörper, bei dem die Dicke deutlich geringer ist als die Länge und die Breite. Länge und Breite eines solchen scheibenförmigen Formkörpers (oder einer Scheibe) definieren die Hauptflächen, welche zusammen mehr als 50% der Gesamtoberfläche ausmachen, häufig auch deutlich mehr, gerade bei sehr dünnen Scheiben. Die Hauptflächen oder Seiten stehen damit im Gegensatz zu den umlaufenden Kantenflächen der Scheibe. Allgemein umfasst eine Scheibe damit im Sinne der vorliegenden Offenbarung zwei Seiten, die je nachdem auch als Ober- und Unterseite oder Vorder- und Rückseite bezeichnet werden können.

Im Rahmen der vorliegenden Offenbarung werden die Begriffe der "Schicht" und der "Beschichtung" synonym in dem Sinne verstanden, dass unter einer Schicht eine Materiallage verstanden wird, welche mittels eines speziellen Verfahrens (eines sogenannten Beschichtungsverfahrens) auf ein Substrat einer zumeist anderen Zusammensetzung als das Material der Beschichtung bzw. Schicht aufgebracht wird. Solche Beschichtungsverfahren können im Rahmen der vorliegenden Offenbarung insbesondere Beschichtungsverfahren sein, wie Drucken, bevorzugt Sieb- oder Tampondruck, Auftreichen Rollen, als Film applizieren, oder Rakeln, aber auch Tauchen und Sprühen oder sonstige weitere Beschichtungsverfahren sind allgemein denkbar. Es ist allgemein denkbar, eine Beschichtung oder Materiallage auch in Form einer Laminierung aufzubringen, beispielsweise mittels des Laminierens einer Folie. Die polymerische Lage des Verbundes kann daher allgemein im Rahmen der vorliegenden Offenbarung als Materiallage im Sinne der Offenbarung verstanden werden.

Unter einer Emaillebeschichtung wird im Rahmen der vorliegenden Offenbarung allgemein eine Beschichtung verstanden, welche wenigstens einen glasigen Bestandteil umfasst, welcher durch einen thermischen Prozess auf einem Substrat anhaftet. Die Emaillebeschichtung kann neben dem glasigen Bestandteil weitere Bestandteile umfassen, insbesondere wenigstens ein Pigment und ggf. einen oder mehrere Zusatzstoffe, wie beispielsweise einen oder mehrere Füllstoffe oder ein sogenanntes Blähmittel. Unter einem glasigen Bestandteil wird vorliegend ein Bestandteil verstanden, welcher anorganisch und amorph ausgebildet ist, insbesondere umfassend $SiO_2$. Insbesondere kann der glasige Bestandteil aus einem Schmelzprozess hervorgegangen sein oder aus Glas ausgebildet sein. Allgemein wird unter einem Glas ein anorganischer, amorpher Festkörper verstanden, welcher aus einem Schmelzprozess erhalten ist. In der Regel handelt es sich dabei um ein silikatisches Glas. Der glasige Bestandteil der Emaillebeschichtung kann insbesondere als Glasfluss oder Glasfritte ausgebildet sein. Diese Begriffe sind dem Fachmann auf dem Gebiet der Beschichtung von Glas bekannt. Die Emaillebeschichtung kann im Rahmen der vorliegenden Offenbarung so ausgebildet sein, dass der glasige Bestandteil vollständig aufgeschmolzen ist, auf das unterliegende Substrat, hier also insbesondere die Glasscheibe, auffließt und sonstige Bestandteile der Beschichtung umhüllt, wie beispielsweise Pigmentpartikel, es ist aber auch möglich, dass die Emaillebeschichtung als gesinterte Beschichtung ausgebildet ist, worunter verstanden wird, dass der glasige Bestandteil beim thermischen Prozess (der auch als Einbrand bezeichnet werden kann), lediglich partiell aufgeschmolzen vorliegt. Dies kann bevorzugt sein, insbesondere, wenn eine Schicht umfassend Poren angestrebt wird.

Unter einem Pigment wird im Rahmen der vorliegenden Offenbarung ein Farbkörper verstanden, also ein Feststoff, welcher eine Eigenfarbe aufweist. Dieser liegt üblicherweise in Partikelform vor. Sofern also im Rahmen der vorliegenden Offenbarung eine Beschichtung ein Pigment umfasst, wird darunter verstanden, dass die Beschichtung Partikel eines Feststoffes mit einer bestimmten Zusammensetzung umfasst. Dies gilt in entsprechender Weise auch für sogenannte Füllstoffe. Füllstoffe sind dabei Feststoffe, welche einer Beschichtung oder einer Schicht in partikulärer Form zugesetzt werden, um bestimmte Eigenschaften der Beschichtung zu beeinflussen, wobei die Füllstoffe primär nicht die Farbe der Beschichtung, sondern andere Eigenschaften, wie beispielsweise thermische Dehnung, Kratzfestigkeit o.ä., betreffen.

Unter einer polymerischen Lage wird eine Materiallage umfassend oder aus einem Polymer verstanden. Insbesondere kann die polymerische Lage als Polymerfolie ausgebildet sein. Ein Polymer ist ein organisches Makromolekül. Wenn im Rahmen der vorliegenden Offenbarung davon gesprochen wird, dass eine Lage oder eine Folie die "aus" einem bestimmten Polymer ist, wird darunter verstanden, dass diese Lage dieses Polymer als wesentlichen Bestandteil umfasst, aber - wie in der Kunststoffindustrie allgemein üblich - auch noch weitere Bestandteile aufweisen kann, die als sogenannte Zuschlagsstoffe bezeichnet werden können.

Unter einer "ungefärbten" Ausbildung eines Materials oder einer Materiallage wird verstanden, dass diese im Bereich des sichtbaren Lichts, also von 380 nm bis 780 nm, farblos ausgebildet ist, also einen neutralen Farbort aufweist und vorzugsweise eine hohe Transparenz in diesem Wellenlängenbereich aufweist. Vorzugsweise beträgt die Transmission ($\tau_{vis}$) in diesem Wellenlängenbereich wenigstens 70% oder mehr, um Anforderungen zu erfüllen, welche beispielsweise den Einsatz eines Scheibenverbundes als Windschutzscheibe ermöglichen. Die Mindesttransmission für Windschutzscheiben beträgt allgemein mehr als 70 %. Blendreduktionskeile im oberen Nebensichtbereich sind zur Abschattung von Blendlicht zulässig, sofern diese auf einer Fläche von weniger als 0,1 $m^2$ auftreten. Die Ausbildung solcher Bereiche zur Abschattung als Gradient bis 0 % Transmission am Rand der Scheibe ist möglich. Die Norm dazu ist in Europa die ECE R43 (Regelung Nr. 43 der Wirtschaftskommission der Vereinten Nationen für Europa (UNECE) - Einheitliche Bedingungen für die Genehmigung der Sicherheitsverglasungswerkstoffe und ihres Einbaus in Fahrzeuge - Amtsblatt der Europäischen Union L 42/1; 03.11.2013).

Unter einer Poren umfassenden Schicht oder Beschichtung wird eine Beschichtung verstanden, welche porös ausgebildet ist. Insbesondere kann darunter eine Beschichtung verstanden werden, welche eine offene Porosität, vorzugsweise sogar mit durchgehenden Poren, aufweist. Unter durchgehenden Poren oder einer durchgehenden Porosität wird verstanden, dass es Fluidkanäle gibt, welche die erste Seite einer Materiallage mit einer zweiten, der ersten Seite gegenüberliegenden Seite der Materiallage verbinden.

Eine Ausgestaltung eines Verbundglases wie vorstehend beschrieben weist eine Reihe von Vorteilen auf, auf welche im Folgenden beispielhaft eingegangen wird.

Das Verbundglas umfasst wenigstens zwei Glasscheiben, wobei wenigstens eine Glasscheibe eine Glasscheibe umfassend ein Glas umfassend $SiO_2$ und $B_2O_3$ ist, ist also als Borosilikatglasscheibe ausgebildet. Eine solche Glasscheibe weist, wie vorstehend auch bereits diskutiert, eine gute mechanische Festigkeit (insbesondere Bruchfestigkeit), eine hohe thermische Beständigkeit und auch eine gute Kratzfestigkeit (die auch als Beständigkeit gegen Angriff mit kleinen, spitzen Gegenständen verstanden werden kann bzw. dieser systemisch ähnlich ist) auf. Auch die chemische Beständigkeit dieser Gläser ist im Vergleich beispielsweise mit Kalk-Natron-Gläsern sehr gut ausgeprägt. Dies ist insbesondere auch für Fahrzeugscheiben von Relevanz, da diese beispielsweise im Winter Salzsprühnebel ausgesetzt sein können, welcher auch zu sogenannter Glaskorrosion führen kann. Hier kann die höhere chemische Resistenz von Borosilikatgläsern von Vorteil gegenüber bekannten Kalk-Natron-Gläsern sein.

In wenigstens einem Bereich der wenigstens einen Scheibe aus bzw. umfassend ein Borosilikatglas ist wenigstens eine Beschichtung angeordnet. Darunter wird hier allgemein verstanden, dass das Verbundglas wenigstens eine Beschichtung umfasst, wobei insbesondere auch vorgesehen sein kann, dass das Verbundglas nur eine einzige Beschichtung umfasst. Es ist aber auch möglich und kann vorgesehen sein, dass das Verbundglas weitere Beschichtungen umfasst. Diese können im Bereich, der die wenigstens eine Beschichtung aufweist, angeordnet sein, oder mit diesem teilweise überlappen; dies ist aber nicht zwingend erforderlich.

Die wenigstens eine Beschichtung ist eine Beschichtung, welche den Zweck hat, als eine Art vorzugsweise blickdichter Bereich, vorzugsweise im Randbereich der wenigstens einen Glasscheibe bzw. in entsprechender Weise des Verbundglases, ausgebildet zu sein, beispielsweise als eine Art Kaschierung von Leitungen o.ä., aber teilweise auch als Sonnen- oder Blendschutz für Fahrzeuginsassen, beispielsweise einen Fahrzeugführer. Nach einer Ausführungsform kann die wenigstens eine Beschichtung in Form eines Rahmens, also eines um die Kante einer Seite der Glasscheibe umlaufenden Bereichs, ausgebildet sein.

Zu diesem Zweck ist die wenigstens eine Beschichtung als pigmentierte Beschichtung, also eingefärbt, ausgebildet. Das wenigstens eine Pigment, welches von der wenigstens einen Beschichtung umfasst ist, sorgt dafür, dass die Beschichtung eine hinreichende optische Dichte aufweist, sodass elektronische Komponenten nicht störend sichtbar ist und/oder dass die Beschichtung ihren Zweck als Abschattung/Blendschutz ausüben kann. Die wenigstens eine Beschichtung ist als Emaillebeschichtung ausgebildet, welche wenigstens, wie ausgeführt, ein Pigment und einen glasigen Bestandteil umfasst. Solche Emaillebeschichtung sind wegen ihrer glasigen Ausbildung nicht nur chemisch und mechanisch gut beständig, sondern auch gut mit einem glasigen Substrat wie der hier in Rede stehenden Glasscheibe kompatibel, sodass auf diese Weise auch im Allgemeinen eine relativ gute Haftfestigkeit erzielt werden kann.

Vorzugsweise kann die Glasscheibe, insbesondere durch die Ausbildung der wenigstens einen Beschichtung selbst, so ausgebildet sein, dass sie eine Biegefestigkeit zwischen wenigstens 5 und höchstens 170 MPa, bevorzugt wenigstens 20 und höchstens 170 MPa, besonders bevorzugt wenigstens 35 MPa, ganz besonders bevorzugt wenigstens 60 MPa, und am meisten bevorzugt wenigstens 80 MPa, aufweist. Vorzugsweise ist also die Beschichtung und/oder die wenigstens eine Glasscheibe so ausgebildet, dass die inhärente Festigkeit der Glasscheibe erhalten bleibt oder nur wenig herabgesetzt wird.

Wie ausgeführt, umfasst das Verbundglas eine zwischen den Glasscheiben angeordnete polymerische Lage, wobei ein Polymer der polymerischen Lage ungefärbt vorliegt. Mit anderen Worten ist der Kunststoff der polymerischen Lage und damit diese insgesamt transparent ausgebildet. Dies ist selbstverständlich nicht nur vorteilhaft, sondern im Sichtbereich einer Fahrzeugscheibe auch zwingend erforderlich. Bei bekannten Verbundgläsern des Standes der Technik ist es aber auch bekannt, dass die polymerische Lage im Bereich der wenigstens einen Beschichtung gefärbt ausgebildet sein kann. Bei Verbundgläsern des Standes der Technik kann beispielsweise vorgesehen sein, dass im Rahmenbereich, beispielsweise also dem Bereich der wenigstens einen Beschichtung, eine diesen Rahmen nachbildende polymerische Lage, die selbst eingefärbt ist, angeordnet ist. Im Sichtbereich ist dann wiederum aus naheliegenden Gründen eine ungefärbte polymerische Lage angeordnet. Um also im Sichtbereich eine ausreichende Transparenz des Verbundglases zu ermöglichen, gleichzeitig aber auch eine ausreichende Opazität im Randbereich zu erzeugen, sind daher im Stand der Technik manchmal zwei unterschiedliche polymerische Lagen, beispielsweise zwei unterschiedliche Polymerfolien, notwendig.

Dies ist nach der vorliegenden Offenbarung nicht notwendig, sondern vielmehr ist vorzugsweise vorgesehen, dass eine polymerische ungefärbte Lage zwischen den Scheiben des Verbundglases ausgebildet ist. Insbesondere ist diese bevorzugt auch im Bereich der wenigstens einen Beschichtung ungefärbt ausgebildet. Beispielsweise kann vorgesehen sein, dass die polymerische Lage ganzflächige zwischen den beiden Glasscheiben angeordnet ist.

Selbst verständlich es möglich, aus anderen Gründen, beispielsweise einer besseren Haftfestigkeit eines bestimmten Polymers auf einer Beschichtung, auch nach der vorliegenden Offenbarung eine "zwei Folien" bzw. "zwei Polymere"-Lösung vorzunehmen.

Dennoch ist mit dem Verbundglas nach der vorliegenden Offenbarung ein einheitlicher, dunkler Farbort des Verbundglases, bestimmt in Betrachtungsrichtung von der ersten zur zweiten Seite der wenigstens einen Glasscheibe in dem wenigstens einen Bereich, in welchem die wenigstens eine Beschichtung angeordnet ist, möglich, und zwar auch bei Verwendung nur einer einzigen polymerischen Lage, die vollflächig zwischen den Glasscheiben angeordnet ist. Dies ist möglich, weil die wenigstens eine Beschichtung porös ausgebildet ist, vorzugsweise mit einer offenen, durchgehenden Porosität, und weil im Bereich der wenigstens einen Beschichtung zumindest ein Teil der polymerischen Lage die Poren der wenigstens einen Beschichtung zumindest teilweise auffüllt.

Die poröse Ausbildung der wenigstens einen Beschichtung führt dazu, dass diese Beschichtung die mechanische Festigkeit der wenigstens einen Glasscheibe nicht kritisch beeinträchtigt, beispielsweise nur wenig herabsetzt. Dies führt aber gleichzeitig zu einer nicht ausreichend neutralen, dunklen Farbe der Beschichtung bzw. in entsprechender Weise des Glasverbundes. Durch die Poren kommt es nämlich zur Streuung, sodass ein unruhiges Erscheinungsbild resultiert, wodurch keine ausreichende Kaschierung von Komponenten möglich ist und der Fahrzeuginsasse abgelenkt werden kann. Dies ist aus Sicherheitsgründen ungünstig.

Durch die spezielle Ausbildung der Beschichtung mit offenen Poren mit einer vorzugsweise durchgehenden Porosität, wie vorstehend beschrieben, können allerdings Bestandteile der polymerischen Lage die Poren zumindest teilweise auffüllen. Unter "Bestandteilen der polymerischen Lage" wird hierbei nicht verstanden, dass einzelne Komponenten der polymerischen Lage in die Poren hineingehen, sondern dass die polymerische Lage teilweise in die Poren hineingezogen wird und diese zumindest teilweise auffüllt. Dies kann beispielsweise dann geschehen, wenn im Rahmen der Ausbildung des Glasverbundes die polymerische Lage zwischen den Glasscheiben angeordnet wird, beispielsweise in Form einer Folie, und während des erfolgenden Laminiervorgangs die polymerische Lage so niedrigviskos wird, dass sie aufgrund von Kapillarkräften in die Poren hineingezogen wird. Gemäß einer Ausführungsform kann dies in der Form geschehen, dass die Poren im Wesentlichen vollständig, also zu wenigstens 80 Vol.-%, von der polymerischen Lage aufgefüllt sind, gerne auch zu mehr als 80 Vol.-%. Allerdings ist es allgemein schwierig, die Verbundgläser so zu präparieren, dass eine entsprechende Bestimmung des Füllgrades analytisch möglich ist.

Durch das Auffüllen der Poren mit einem polymerischen (oder Kunststoff-)Material kann dabei überraschenderweise auch dann ein einheitlicher, sehr dunkler, Farbort erzielt werden, wenn das Polymer der polymerischen Lage selbst gar nicht eingefärbt vorliegt. Damit entfällt die Notwendigkeit, zwei unterschiedliche polymerische Lagen, nämlich eine eingefärbte für den Bereich der wenigstens einen Beschichtung und eine ungefärbte/transparente im "Sichtbereich" des Verbundglases, vorzusehen. Dies vereinfacht die Herstellung eines Verbundglases ganz außerordentlich.

Auf diese Weise kann dann sehr einfach ein Farbort des Verbundglases, bestimmt in Betrachtungsrichtung von der ersten zur zweiten Seite der wenigstens einen Glasscheibe in dem wenigstens einen Bereich, in dem auf der zweiten Seite der wenigstens einen Glasscheibe die wenigstens eine Beschichtung aufgetragen ist, gegeben im CIEL\*a\*b\*-System realisiert werden, wobei L\* höchstens 12 ist und vorzugsweise wenigstens 1, und a\* und b\* jeweils im Bereich zwischen +5 und -5 liegen.

Vorzugsweise umfasst die polymerische Lage Polyvinylbutyran (PVB) oder ist beispielsweise als sogenannte PVB-Folie ausgebildet.

Nach einer Ausführungsform kann die polymerische Lage eine Dicke zwischen 650 $\mu$m und 850 $\mu$m aufweisen. Typische Dicken von beispielhaft geeigneten Folien sind beispielsweise 700 $\mu$m und 760 $\mu$m.

Nach einer weiteren Ausführungsform kann die wenigstens eine Beschichtung zwischen 2 und 10 mm aufweisen, beispielsweise bis höchstens 7 $\mu$m.

Vorzugsweise kann die wenigstens eine ein Borosilikatglas umfassende Scheibe eine gefloatete Glasscheibe sein. Die wenigstens eine Beschichtung ist in diesem Fall vorzugsweise auf der sogenannten Atmosphärenseite der Glasscheibe aufgebracht.

Nach einer Ausführungsform ist die Lichttransmission, $\tau_{vis}$, bestimmt in dem wenigstens einen Bereich, weniger als 5 % ist, bevorzugt weniger als 2%, besonders bevorzugt weniger als 1% und besonders bevorzugt weniger als 0,5%. Die Lichttransmission wird dabei selbstverständlich dort realisiert, wo die wenigstens eine Beschichtung vollflächig aufgebracht ist. Die geringe Lichttransmission zeigt, dass nach dieser Ausführungsform eine sehr hohe Abschattungs- und Kaschierungswirkung der wenigstens einen Beschichtung vorliegt.

Allgemein wird darauf hingewiesen, dass die wenigstens eine Beschichtung häufig in Form eines um die Kante der wenigstens einen Glasscheibe und somit in entsprechender Weise auch die Kante des Verbundglases herum aufgebracht ist. Dabei kann vorgesehen sein, dass in bestimmten Bereichen eine Ausbuchtung vorliegt, beispielsweise in dem Bereich, in welchem bei einer Windschutzscheibe ein Rückspiegel angeordnet ist. Auch kann vorgesehen, dass in den Bereichen zum Inneren des Verbundglases hin der vollflächig aufgebrachte Rahmen in einen Bereich mit einem Belegungsgrad übergeht, in welchem die Beschichtung in Form eines Rasters mit einem geringeren Belegungsgrad aufgebracht ist. Dies ist beispielsweise bei Sichtscheiben im Fahrzeugbereich durchaus üblich.

Gemäß einer Ausführungsform liegt der Pigmentgehalt der wenigstens einen Beschichtung zwischen 1 Vol.-% und 40 Vol.-%, bevorzugt bei weniger als 37,5 Vol.-%, wobei allgemein eine bevorzugte Untergrenze bei 5 Vol.-% liegt. Auf diese Weise lassen sich optische eingefärbte, dunkle Beschichtungen realisieren, wobei gleichzeitig eine noch immer ausreichende Haftfestigkeit der Beschichtung auf dem Substrat, also hier der Glasscheibe, gewährleistet ist.

Dies wird gemäß einer weiteren Ausführungsform vorteilhaft dadurch unterstützt, dass der Gehalt der wenigstens einen Beschichtung an glasigem Bestandteil, bezogen auf den Feststoffgehalt der wenigstens einen Beschichtung, zwischen 60 Vol.-% und 99 Vol.-% liegt. Bevorzugt zwischen 62,5 Vol.-% und 95 Vol.-%. Der zu 100 Vol.-% fehlende Gehalt an Feststoff kann insbesondere von wenigstens einem Pigment gebildet werden, wozu gegebenenfalls noch weitere Bestandteile, wie beispielsweise ein Füllstoff oder auch mehrere Füllstoffe kommen können, genauso wie gegebenenfalls weitere Pigmente.

Sofern die Zusammensetzung der wenigstens einen Beschichtung nicht in Vol.-% angegeben wird, sondern in Gew.-%, sind dies hinsichtlich des Pigmentgehalts der wenigstens einen Beschichtung zwischen etwa 1 Gew.-% und 60 Gew.-% Pigment. Der Gehalt der wenigstens einen Beschichtung an glasigem Bestandteil liegt bei etwa 35 Gew.-% bis etwa 98 Gew.-%. Sofern die wenigstens eine Beschichtung einen Zusatzstoff, der als Füllstoff ausgebildet ist, umfasst, sind Gehalte in Gew.-% zwischen 1 Gew.-% und 15 Gew.-% möglich. Diese Angaben beziehen sich, wie auch die Vol.-%-Angaben, jeweils auf den Feststoffgehalt der wenigstens einen Beschichtung, und gelten damit in entsprechender Weise auch für den Feststoffgehalt einer Paste, die zum Herstellen einer entsprechenden wenigstens einen Beschichtung einer Glasscheibe nach Ausführungsformen verwendet werden kann.

Gemäß einer weiteren Ausführungsform umfasst die wenigstens eine Beschichtung neben wenigstens einem Pigment und dem glasigen Bestandteil einen Zusatzstoff. Selbstverständlich ist es möglich, dass die wenigstens eine Beschichtung mehrere Zusatzstoffe, die unterschiedlich ausgebildet sind, umfasst. Der Zusatzstoff kann beispielsweise als Füllstoff ausgebildet sein, beispielsweise als die Kratzfestigkeit erhöhender oder die thermische Dehnung der Beschichtung beeinflussender Füllstoff. Es ist auch möglich, dass der Zusatzstoff ein Blähmittel ist, was auch als Porenformer oder Schäumungsmittel bezeichnet werden kann. Ein solches Blähmittel zersetzt sich beim Einbrand der wenigstens einen Beschichtung, wobei sich Gas bildet, welches zur Bildung von Poren beiträgt und insbesondere die Ausbildung auch einer offenen Porosität, wie sie hier besonders vorteilhaft ist, in vorteilhafter Weise unterstützt. Ein als Blähmittel ausgebildeter Zusatzstoff kann in entsprechenden Mengen wie ein als Füllstoff ausgebildeter Zusatzstoff einer Paste zum Herstellen einer wenigstens einen Beschichtung nach Ausführungsformen zugegeben werden, zählt aber aus naheliegenden Gründen, nämlich der Zersetzung, nicht mehr zum Feststoffgehalt der wenigstens einen Beschichtung.

Gemäß einer weiteren Ausführungsform umfasst der glasige Bestandteil der wenigstens einen Beschichtung, gegeben in Gew.-% auf Oxidbasis:

$SiO_2$    10 bis 70

(fortgesetzt)

| | |
|---|---|
| $B_2O_3$ | 5 bis 30, bevorzugt 6 bis 25 |

Mit anderen Worten ist der glasige Bestandteil (oder Glasfluss oder Glasfritte) nach dieser Ausführungsform selbst als umfassend ein Borsilikatglas ausgebildet. Dies ist selbstverständlich vorteilhaft, weil auf diese Weise eine hohe Kompatibilität zwischen dem Glasfluss und der wenigstens einen Glasscheibe, auf welche die wenigstens eine Beschichtung bereichsweise aufgebracht ist, möglich ist.

Zusätzlich kann allgemein vorgesehen sein, dass der glasige Bestandteil noch $Al_2O_3$ umfasst, vorzugsweise in einer Menge von weniger als 10 Gew.-%.

Je nach genauem Schwerpunkt kann der Glasfluss bzw. der glasige Bestandteil gemäß weiterer, bevorzugter Ausführungsformen im genannten Rahmen unterschiedlich ausgebildet sein.

Beispielsweise ist es möglich, dass der glasige Bestandteil der wenigstens einen Beschichtung, in Gew.-% auf Oxidbasis, umfasst:

| | |
|---|---|
| $SiO_2$ | 10 bis 50 |
| $B_2O_3$ | 10 bis 26 |
| ZnO | 20 bis 50, |

wobei vorzugsweise die Summe der Alkalioxide ($R_2O$) zwischen kleiner 0,5 Gew.-% und 10 Gew.-% liegt und/oder die Summe der Erdalkalioxide zwischen 0 Gew.-% und 2,5 Gew.-% liegt.

In diesem Fall ist also der Glasfluss als Zinkboratglasfluss ausgebildet. Dies ist vorteilhaft, weil dadurch die Schmelztemperatur der Fritte erniedrigt wird und somit eine genügende Fließfähigkeit bei Einbrandtemperaturen (500-750°C) trotz Pigment und Füllstoffgehaltes gegeben ist.

Gemäß einer anderen Ausführungsform umfasst der glasige Bestandteil der wenigstens einen Beschichtung, in Gew.-% auf Oxidbasis,

| | |
|---|---|
| $SiO_2$ | 30 bis 60 |
| $B_2O_3$ | 15 bis 25 |
| $Bi_2O_3$ | 8 bis 45, |

wobei vorzugsweise die Summe der Alkalioxide ($R_2O$) zwischen 3,5 Gew.-% und 8,5 Gew.-% vorzugsweise zwischen 4 Gew.-% und 6,5 Gew.-%, liegt und/oder die Summe der Erdalkalioxide 0,5 Gew.-% oder weniger beträgt. Vorzugsweise umfasst nach dieser Ausführungsform der glasige Bestandteil wenigstens 2,5 Gew.-% von wenigstens einem Oxid der Gruppe $Li_2O$, $Na_2O$ und $K_2O$, wobei allgemein das Verhältnis der Alkalioxide ($R_2O$) zu Aluminiumoxid, bezogen auf den Stoffmengenanteil, kleiner als 6 ist, also

$$\frac{\sum R_2O}{Al_2O_3} < 6.$$

In diesem Fall handelt es sich also um einen Bismut-Borat-Glasfluss. Dieser ist besonders vorteilhaft, wenn ein Optimum zwischen den thermischen Ausdehnungskoeffizienten des Substrats und Glasfluss unter Berücksichtigung der Einbrandtemperatur adressiert werden soll. Auf diese Weise lassen sich dann besonders gute Festigkeitswerte erzielen.

Nach einer weiteren Ausführungsform umfasst der glasige Bestandteil, in Gew.-% auf Oxidbasis,

| | |
|---|---|
| $SiO_2$ | 50 bis 70 |
| $B_2O_3$ | 15 bis 30 |
| $Bi_2O_3$ | 0 bis 15 |
| ZnO | 0 bis 5, |

wobei vorzugsweise die Summe der Alkalioxide zwischen 4 und 6,5 Gew.-% liegt und/oder die Summe der Erdalkalioxide zwischen 0 und 2,5 Gew.-% liegt.

Gemäß einer weiteren Ausführungsform umfasst die wenigstens eine Beschichtung einen als Füllstoff ausgebildeten Zusatzstoff, wobei der Füllstoff bevorzugt einen linearen thermischen Ausdehnungskoeffizienten zwischen $-7 \cdot 10^{-6}$/K und $1,5 \cdot 10^{-6}$/K. Der lineare thermische Ausdehnungskoeffizient kann auch kurz als $\alpha$ bezeichnet werden, wobei als Index auch der Temperaturbereich, für den der Ausdehnungskoeffizient bestimmt wurde, angegeben sein kann. Sofern im Rahmen der vorliegenden Offenbarung auf die thermische Dehnung abgestellt wird, wird darunter die lineare thermische Dehnung verstanden. Die Begriffe "linearer thermische Ausdehnungskoeffizient", "thermischer Ausdehnungskoeffizient", "Ausdehnungskoeffizient", "CTE" und "$\alpha$" werden dabei im Rahmen der vorliegenden Offenbarung synonym verwendet, sofern dies nicht explizit anders angegeben ist. Insbesondere kann der lineare thermische Ausdehnungskoeffizient bestimmt werden in einer Methode nach ISO 7991.

Füllstoffe, deren thermischer Ausdehnungskoeffizient im vorstehend genannten Bereich liegt, sind vorteilhaft, weil auf diese Weise die thermische Dehnung der wenigstens einen Beschichtung, die ja aus deren Bestandteilen resultiert, beeinflusst und insbesondere verringert werden kann. Da Pigmente in der Regel einen eher höheren thermischen Ausdehnungskoeffizienten aufweisen als ein Borosilikatglas, welches ja das Substratmaterial nach der vorliegenden Offenbarung ist, kann es vorteilhaft sein, einen Füllstoff mit einem relativ niedrigen thermischen Ausdehnungskoeffizienten der Beschichtung zuzugeben, sodass die resultierende Festigkeit der Glasscheibe/des Verbundes nicht zu gering wird.

Es hat sich so nach einer Ausführungsform gezeigt, dass es bei Zugabe eines Füllstoffs durch gezielte Einstellung von Verhältnis des Gehalts von Pigment und nanopartikulärem Füllstoff möglich ist, einen Scheibenverbund mit guten mechanischen Eigenschaften und hoher Opazität zu erzielen. Verwendete Pigmente weisen üblicherweise einen Durchmesser auf, welcher wenigstens eine Größenordnung größer ist als der nanopartikulärer Füllstoffe. Bevorzugte Durchmesser bzw. Größen der Pigmente sind auch weiter unten im Beispielteil angegeben.

Gemäß einer Ausführungsform umfasst die wenigsten eine Beschichtung einen als Füllstoff ausgebildeten Zusatzstoff, dessen Gehalt zwischen 0,5 Vol.-% und 20 Vol.-% liegt, vorzugsweise bei weniger als 15 Vol.-%.

Vorzugsweise kann vorgesehen sein, dass die wenigstens eine Beschichtung zwei Füllstoffe aufweist, welche sich in ihren Eigenschaften, beispielsweise hinsichtlich ihrer Partikelgröße, unterscheiden. Hinsichtlich der Partikelgröße wird vorliegend stets auf den Äquivalentdurchmesser, bezogen auf den $d_{50}$-Wert der Partikelgrößenverteilung, abgestellt. Sofern daher im Rahmen der Offenbarung pauschal die "Partikelgröße" oder der "Durchmesser" genannt sind, handelt es sich dabei, sofern nicht ausdrücklich anders angegeben, um die $d_{50}$-Wert der Partikelgrößenverteilung.

Eine solche Ausgestaltung mit zwei Füllstoffen, die hinsichtlich ihrer Partikelgrößen unterschiedlich ausgebildet sind, kann vorteilhaft sein, weil auf diese Weise eine besonders vorteilhafte Porengrößenverteilung resultiert, mit der insbesondere das Eindiffundieren bzw. das Eindringen der des Polymers in die Poren der wenigstens einen Beschichtung besonders einfach möglich ist. Beispielsweise ist es möglich, dass ein Füllstoff ein Nano-Füllstoff ist, also eine Partikelgröße von weniger als 100 nm aufweist, ein anderer Füllstoff jedoch eine Partikelgröße aufweist, die wenigstens eine halbe Größenordnung größer ist als der des nanopartikulären Füllstoffs. Der nanopartikuläre Füllstoff kann beispielsweise eine Partikelgröße von höchstens 50 nm aufweisen, wobei der weitere Füllstoff dann eine Partikelgröße von vorteilhafter Weise wenigstens 0,5 $\mu$m aufweisen sollte. Auf diese Weise kann besonders gut eine gute Porosität in der Beschichtung erzielt werden Übliche Größen von nicht-nanopartikulären Füllstoffen liegen bei etwa 0,5 $\mu$m bis 1,5 $\mu$m.

Es hat sich allerdings auch gezeigt, dass es bei Zugabe eines vorzugsweise nanopartikulären Füllstoffs, also eines Füllstoffs mit einem Partikeldurchmesser von höchstens 50 nm, sogar ausreichend sein kann, wenn kein weiterer Füllstoff vorhanden sind, sondern lediglich das Verhältnis des Gehalts von Pigment und nanopartikulärem Füllstoff gut eingestellt ist. Denn verwendete Pigmente weisen üblicherweise einen Durchmesser auf, welcher wenigstens eine Größenordnung größer ist als der nanopartikulärer Füllstoffe. Für Weißpigmente ist dieser vorzugsweise 1 $\mu$m oder kleiner, bevorzugt 0,8 $\mu$m oder kleiner, besonders bevorzugt 0,6 $\mu$m oder kleiner. Bevorzugte Durchmesser bzw. Größen der Pigmente sind auch weiter unten in im Beispielteil angegeben.

Gemäß einer weiteren Ausführungsform umfasst die wenigstens eine Beschichtung und/oder die Paste einen weiteren Zusatzstoff, welcher als Blähmittel ausgebildet ist. Der Blähmittelgehalt der Paste, mit welcher eine entsprechende wenigstens eine Beschichtung nach Ausführungsformen für ein Verbundglas nach der Offenbarung hergestellt werden kann, liegt in diesem Fall bevorzugt zwischen 5 Vol.-% und 25 Vol.-%, besonders bevorzugt bei weniger als 15 Vol.-%.

Gemäß einer weiteren Ausführungsform umfasst die wenigstens eine Glasscheibe wenigstens 60 Gew.-% und höchstens 85 Gew.-% $SiO_2$, wenigstens 8 Gew.-% und höchstens 26 Gew.-% $B_2O_3$, wenigstens 0,5 Gew.-% und höchstens 12 Gew.-% $Al_2O_3$ und wenigstens 0,5 Gew.-% und höchstens 6 Gew.-% $Na_2O$, wobei bevorzugt weiterhin umfasst sein können bis zu 1 Gew.-% $Li_2O$, bis zu 4 Gew.-% $K_2O$, bis zu 5 Gew.-% MgO, bis zu 3,5 Gew.-% CaO, 4 Gew.-% SrO, bis zu 3 Gew.-% ZnO, bis zu 3 Gew.-% $ZrO_2$, sowie weiterhin Nebenbestandteile, wie beispielsweise Läutermittel, wobei die Summe dieser Nebenbestandteile nicht mehr als 2 Gew.-% beträgt.

$SiO_2$ ist der primäre Netzwerkbildner und der Hauptbestandteil des Glases der wenigstens einen Glasscheibe. Damit die Glasscheibe ausreichend chemisch und mechanisch stabil ist, sollte daher der Gehalt der Glasscheibe an $SiO_2$ wenigstens 60 Gew.-% betragen. Um eine gute Schmelzbarkeit zu gewährleisten, ist allerdings der Gehalt der

Glasscheibe an $SiO_2$ vorzugsweise begrenzt und umfasst nach einer Ausführungsform nicht mehr als 85 Gew.-%. $B_2O_3$ ist ein weiterer Bestandteil der wenigstens einen Glasscheibe und vorzugsweise zu wenigstens 8 Gew.-% im Glas enthalten. Auf diese Weise kann die Schmelzviskosität des Glases gering gehalten werden, was aus Produktionssicht günstig ist. Vorteilhaft ist der Gehalt des Glases an $B_2O_3$ nicht zu hoch, um eine ausreichend chemisch stabiles Glas zu erhalten. Das Glas umfasst weiterhin wenigstens 0,5 Gew.-% $Al_2O_3$. $Al_2O_3$ ist ein sogenanntes Zwischenoxid, welches in Borosilikatgläsern vorzugsweise zugegeben wird, um die in diesen Gläsern gegebene Entmischungstendenz zu vermindern. Auch kann $Al_2O_3$ die Härte eines Glases verbessern. Da es aber gleichzeitig die chemische Beständigkeit herabsetzen und dabei auch die Schmelztemperatur erhöhen kann, sollte es in nicht zu hohen Gehalten im Glas vorhanden sein und eine bevorzugte Obergrenze beträgt daher hier höchstens 12 Gew.-% $Al_2O_3$. Schließlich umfasst das Glas noch $Na_2O$ zu wenigstens 0,5 Gew.-% und höchstens 6 Gew.-%. Auf diese Weise kann der Schmelzpunkt des Glases weiter gesenkt werden, wobei gleichzeitig sichergestellt wird, dass keine zu hohen Gehalte an $Na_2O$ vorliegen, welche die chemische Beständigkeit des Glases zu stark verringern würden.

Weitere Bestandteile können ebenfalls vom Glas umfasst sein. Beispielsweise kann bis zu 1 Gew.-% $Li_2O$ umfasst sein, bis zu 4 Gew.-% $K_2O$, bis zu 5 Gew.-%MgO, bis zu 3,5 Gew.-% CaO, bis zu 4 Gew.-% SrO, bis zu 3 Gew.-% ZnO, bis zu 3 Gew.-% $ZrO_2$. Diese Komponenten können unterschiedliche Eigenschaften des Glases beeinflussen, beispielsweise einer Entmischungstendenz weiter entgegenwirken (wie beispielsweise der Zusatz von $K_2O$), die Festigkeit des Glases verbessern und dergleichen.

Selbstverständlich kann das Glas allgemein weitere Nebenbestandteile umfassen, wie beispielsweise Läutermittel, wobei die Summe dieser Nebenbestandteile nicht mehr als 2 Gew.% beträgt.

Gemäß einer weiteren Ausführungsform umfasst die weitere Glasscheibe ein Kalk-Natron-Glas oder besteht aus einem solchen.

Ein Kalk-Natron-Glas ist allgemein ein Glas umfassend, als Hauptbestandteile, $SiO_2$, CaO und $Na_2O$ und wird in großen Mengen hergestellt. Es ist günstig verfügbar, weist jedoch auch gewisse Schwächen auf, beispielsweise eine relativ geringe chemische und mechanische Beständigkeit. Aufgrund der guten Verfügbarkeit kann es allerdings sehr vorteilhaft sein, ein solches Glas für das Verbundglas vorzusehen, und zwar vorzugsweise auf der Seite des Verbundes, welche im Gebrauch einer geringeren mechanischen Beanspruchung und/oder Korrosion ausgesetzt ist. Bei einer Fahrzeugscheibe aus einem bzw. umfassend ein Verbundglas kann dies vorteilhaft die dem Fahrzeuginnenraum zugewandte Seite des Verbundglases sein. Dies stellt einen guten Kompromiss zwischen sehr guter Beständigkeit des Verbundglases und akzeptablen Kosten dar.

Gemäß einer weiteren Ausführungsform weist der Verbund ein Level von wenigstens 3 in einem sogenannten Pummel-Test auf. Der Pummel-Test, von englisch "to pummel" = schlagen, ist ein Maß für die Beständigkeit bzw. die Qualität des Verbundes und wird in der Norm ASTM C1908-21 beschrieben. Allgemein gilt, dass bei der Zerstörung des Verbundes, welches beispielsweise auch als "Verbundsicherheitsglas" bezeichnet werden kann, die Glasbruchstücke an der polymerischen Lage, beispielsweise ausgestaltet als PVB-Folie, zwischen den Glasscheiben des Verbundes haften bleiben müssen. Überprüft wird dies mit dem "Pummel-Test", bei welchem ein Verbundglas umfassend zwei Glasscheiben mit einer maximalen Dicke von 2 * 4 mm auf einer geneigten Metallunterlage mit einem Hammer bearbeitet wird, also auf diese geschlagen wird. Dabei wird das Glas durch die mechanische Einwirkung zerstört. Anschließend erfolgt die visuelle Begutachtung. Das Haftungsniveau wird je freigelegter Folienfläche bzw. freigelegter Fläche der polymerischen Lage in "Pummelwerte" eingeteilt zwischen 0 und 10, wobei höhere Werte für ein besseres Haften der Glasbruchstücke auf der polymerischen Lage stehen.

Die Offenbarung betrifft allgemein auch ein Verfahren zum Herstellen einer Glasscheibe umfassend wenigstens eine Beschichtung und/oder zum Herstellen eines Verbundes umfassend eine Glasscheibe umfassend wenigstens eine Beschichtung.

Für das Herstellen der Glasscheibe umfassend wenigstens eine Beschichtung kann allgemein eine Paste verwendet werden, welche einen Glasfluss, wenigstens ein Pigment und vorzugsweise wenigstens einen Zusatzstoff, welcher vorzugsweise als Füllstoff ausgebildet ist, verwendet wird. In diesem Fall sind die vorstehenden Ausführungen zur Zusammensetzung der wenigstens eine Beschichtung nach Ausführungsformen bezüglich des Pigment- und Bindemittelgehalts in entsprechender Weise anzuwenden, d.h. die Angaben zum Gehalt beziehen sich auf den Feststoffgehalt der Paste. Neben den entsprechenden Feststoffgehalten in den entsprechenden Mengen umfasst die Paste in der Regel zusätzlich zwischen etwa 30 Gew.% und 45 Gew.-% eines Mediums oder Dispersionsmediums, in der Regel ein hochsiedendes Lösungsmittel oder Lösungsmittelgemisch. Insbesondere kann es sich hierbei um ein sogenanntes "Siebdrucköl" handeln, insbesondere, wenn die Paste mittels Siebdruck auf die Glasscheibe aufgebracht wird.

Die Paste kann mittels üblicher Beschichtungsverfahren, insbesondere mittels Druckverfahren, wie Siebdruck, aufgebracht werden.

Es ist weiterhin möglich, dass die Paste einen Zusatzstoff in Form eines Blähmittels umfasst.

Vorzugsweise ist die Zusammensetzung der Paste, insbesondere hinsichtlich des wenigstens einen glasigen Bestandteils, und des verwendeten Glases der Glasscheibe, auf welcher die wenigstens eine Beschichtung aufgebracht ist oder wird, so aufeinander abgestimmt, dass die Einbrandtemperaturen und -zeiten der wenigstens einen Beschichtung bevorzugt den Biegetemperaturen und -zeiten dieser Scheibe entsprechen, sofern diese gebogen wird. Aus Viskositätssicht erfolgt die Bildung der wenigstens einen, als porösen Emailleschicht ausgebildeten Beschichtung, bei denjenigen Temperaturen, bei denen die Scheibe eine Viskosität von lg [η]/dPas von 8-11, bevorzugt 9-10 aufweist, also bei Temperaturen zwischen vorzugsweise wenigstens 590°C und höchstens 850°C.

Beispiele

In der folgenden Tabelle sind einige Zusammensetzungen von geeigneten Glasscheiben nach Ausführungsformen der Offenbarung zusammengestellt, zusammen mit relevanten Daten zu den mit diesen Glaszusammensetzungen erzielten Eigenschaften. Die Zusammensetzungen sind jeweils in Gew.-% auf Oxidbasis angegeben. Abweichungen von 100 % in der Summer geben sich durch Rundungen als Ergebnis der Analyse.

| Glas Nummer | 1 | 2 | 3 | 4 | 5 | 6 | 7 | 8 |
|---|---|---|---|---|---|---|---|---|
| $SiO_2$ | 78,00 | 72,10 | 80,80 | 80,30 | 74,80 | 79,00 | 78,10 | 64,00 |
| $B_2O_3$ | 18,50 | 24,50 | 12,70 | 13,10 | 10,45 | 10,00 | 9,80 | 9,00 |
| $Al_2O_3$ | 1,00 | 1,10 | 2,40 | 2,50 | 2,50 | 4,30 | 2,50 | 10,50 |
| $Li_2O$ | | 0,40 | | | | | | |
| $Na_2O$ | 2,50 | 1,10 | 3,50 | 3,85 | 2,35 | 5,00 | 2,80 | 5,00 |
| $K_2O$ | | 0,80 | 0,60 | 0,00 | 3,00 | 0,60 | 2,50 | 0,80 |
| MgO | | | | | | | 1,80 | 4,50 |
| CaO | | | | | 2,40 | 1,30 | 2,50 | 3,00 |
| SrO | | | | | | | | 3,20 |
| BaO | | | | | | | | |
| ZnO | | | | | 2,00 | | | |
| $TiO_2$ | | | | | | | | |
| $ZrO_2$ | | | | | 2,50 | | | |
| $P_2O_5$ | | | | | | | | |
| Additiv (falls vorhanden) | | | | | | | | |
| $SnO_2$ | | | | | | | | |
| NaCl | 0,15 | | 0,10 | 0,10 | 0,25 | 0,22 | | 0,25 |
| Summe | 100,15 | 100,00 | 100,10 | 99,85 | 100,25 | 100,42 | 100,00 | 100,25 |
| Physikalische Daten | | | | | | | | |
| α (*$10^{-6}$/K) | 2,80 | 3,29 | 3,25 | 3,22 | 4,10 | 4,11 | 4,15 | 5,50 |
| $T_g$(°C) | 535 | 467 | 530 | 520 | 590 | 580 | 589 | 615 |
| Dichte (g/cm³) | 2,18 | 2,13 | 2,22 | 2,22 | 2,35 | 2,28 | 2,31 | 2,44 |
| T14.5 (°C) | 521 | 505 | 532 | 518 | 545 | 565 | 568 | 593 |
| T11 (°C) | 627 | 594 | 637 | 631 | 646 | 661 | 669 | 691 |
| T9 (°C) | 720 | 729 | 729 | 728 | 735 | 746 | 758 | 773 |
| T7.6 (°C) | 810 | 750 | 818 | 820 | 822 | 830 | 843 | 850 |
| E-Modul (GPa) | 58 | 52 | 63 | 64 | 70 | 67 | 69 | |
| Hydrolyt. Best H (Klasse) | 1 | 1 | 1 | 1 | 1 | 1 | 1 | |
| Säurebest. S (Klasse) | 1 | 1 | 1 | 1 | 1 | 1 | 1 | |

Beispielhafte Zusammensetzungen geeigneter Glasflüsse finden sich in der nachfolgenden Tabelle. Auch hier sind die Zusammensetzungen in Gew.-% angegeben. Etwaige Abweichungen von der Summe von 100 Gew.-% sind rundungstechnisch bedingt.

| Glasfluss Nummer | 1 | 2 | 3 | 4 | 5 | 6 | 7 | 8 | 9 | 10 | 11 |
|---|---|---|---|---|---|---|---|---|---|---|---|
| $Al_2O_3$ | 8,2 | 7,2 | 5,4 | 0,6 | 5,9 | 0,10 | 1,00 | 5,1 | 5,3 | 5,0 | 2,0 |
| $B_2O_3$ | 17,5 | 22,8 | 24,0 | 24,6 | 21,5 | 15,7 | 12,8 | 21,9 | 22, 9 | 23,4 | 8,3 |
| BaO | | | | | | | | | | | |
| $Bi_2O_3$ | 14,2 | 10,0 | 10,0 | | | | | | | 11,0 | 43,3 |
| CaO | | | | 1,3 | 1,2 | | | 0,5 | 0,5 | | 0,1 |
| CoO | | | | | 2,9 | | | | | | |
| $K_2O$ | | | | 0,1 | | | | 1,7 | 1,8 | 0,8 | 1,8 |
| $Li_2O$ | | 3,2 | 4,4 | | 4,9 | | | 0,8 | 0,8 | 4,8 | 0,8 |
| MgO | | | | 0,3 | | | | | | | |
| $Na_2O$ | 5,2 | 1,2 | 0,2 | 6,1 | | | | 2,4 | 2,5 | | 2,8 |
| $SiO_2$ | 54,9 | 55,6 | 56,0 | 66,6 | 58,0 | 32,7 | 24,3 | 63,4 | 66, 2 | 55,0 | 29,5 |
| SrO | | | | | 1,0 | | | | | | |
| $TiO_2$ | | | | | | | | | | | 1,6 |
| ZnO | | | | 0,4 | 3,3 | 51,5 | 62,0 | | | | 8,9 |
| $ZrO_2$ | | | | | 1,3 | | | | | | 1,1 |

In der nachfolgenden Tabelle sind geeignete Pigmente für Beschichtungen nach Ausführungsformen aufgeführt. Die angegebene Pigmentklasse bezieht sich auf den sogenannten "Color Index", in welchem die Pigmente in Klassen eingeteilt sind, wobei in der Tabelle "Bk" für "Black" steht, "Br" für "Brwon" und "Gr" für "Green". Die aufgeführten Pigmente sind dabei allgemein für die Herstellung dunkler Schichten nach Ausführungsformen geeignet, insbesondere auch für solche, welche einen schwarzen Farbeindruck hervorrufen. Dies gilt insbesondere auch für die in der Tabelle als "braun" oder "grün" einklassifizierten Pigmente, da diese allgemein so zusammengesetzt sind, dass sie stark absorbierend sind und diese "Farbe" bei Beschichtungen umfassend diese Pigmente oft zumeist lediglich in Form einer leichten Farbschattierung (als braun- oder grünstichiges Schwarz), falls überhaupt, zutage tritt und der allgemeine Farbeindruck einer solchen Beschichtung doch dunkel bzw. schwarz ist.

| Pigmentklasse | Chemie | Partikelgröße (Datenblatt)/ $\mu$m | Dichte (Datenblatt)/ $g/cm^3$ | $d_{10}$ (Mie)/ $\mu$m | $d_{50}$ (Mie)/ $\mu$m | $d_{90}$ (Mie)/ $\mu$m | $d_{99}$ (Mie)/ $\mu$m |
|---|---|---|---|---|---|---|---|
| Bk26 | Mn-Fe-Ferrit Spinell (Fe, Mn)$_3$O$_4$ | 4,1 | 6,9 | 0,26 | 4,27 | 13,21 | 18,58 |
| Bk26 | (Fe,Mn)$_2$O$_3$ | 1 | 5 | | | | |
| Bk27 | Co-Cr-Fe-Spinell (Cr-Fe-Co-Mn, lt. XRF) | 0,7 | 5,3 | 0,54 | 0,84 | 1,29 | 1,79 |
| Bk27 | Cr-Fe-Co-Spinell | 2,1 | 5,8 | 0,78 | 2,05 | 3,68 | 5,06 |

(fortgesetzt)

| Pigmentklasse | Chemie | Partikelgröße (Datenblatt)/ $\mu m$ | Dichte (Datenblatt)/ $g/cm^3$ | $d_{10}$ (Mie)/ $\mu m$ | $d_{50}$ (Mie)/ $\mu m$ | $d_{90}$ (Mie)/ $\mu m$ | $d_{99}$ (Mie)/ $\mu m$ |
|---|---|---|---|---|---|---|---|
| Bk27 | Co-Cr-Fe-Spinell (Cr-Fe-Co-Mn-Ni, lt. XRF) | 2,6 | | | | | |
| Bk28 | Cu-Cr-Spinell | 0,7 | 5,4 | 0,22 | 0,52 | 1,01 | 1,53 |
| Bk28 | Cu-Cr-Spinell | 0,9 | 5,6 | 0,52 | 0,83 | 1,39 | 2,04 |
| Bk28 | Cu-Cr-Spinell | 0,77 | | | | | |
| Bk28 | Co-Cr-Spinell | 0,92 | | | | | |
| Bk30 | Ni-Fe-Cr-Spinell | 1,1 | 5,3 | 0,62 | 0,96 | 1,64 | 2,36 |
| Bk30 | Ni-Cr-Fe Spinell | 0,9 | | | | | |
| Bk33 | Fe-Mn-Oxide (Fe,Mn)$_2$O$_3$ | 0,6 $\mu m$ | 4,6 | 0,7 | 1,28 | 2,85 | 5,34 |
| Bk33 | Fe-Mn-Spinell | 0,89 | | | | | |
| Gr17/Br29* | Cr-Fe-Oxid | 1,2 | 5,8 | 0,68 | 1,09 | 1,89 | 2,82 |
| Br29 | Cr-Fe-Oxid | 0,77 | | | | | |

Geeignete Zusatzstoffe für eine Paste bzw. eine Beschichtung nach Ausführungsformen finden sich in der nachfolgenden Tabelle:

| Füllstoffe | Dichte (g/cm$^3$) | Partikelgröße ($\mu m$) | BET (m$^2$/g) | $\alpha$ (10$^6$/K) |
|---|---|---|---|---|
| $\beta$-Eukryptit | 2,35 | 1,2 | | -1,1 bis -6,5 |
| Kieselsäure (1) | 2,2 | 0,04 | 35-65 | ~0,5 |
| Kieselsäure (2) | 2,2 | | 270-330 | ~0,5 |
| CoralPor® 1000 | 2,4 | 1 | 7-130 | 0,5-1 |
| CoralPor® 2000 | 2,4 | 1 | | 0,5-1 |
| | | | | |
| Blähmittel | | | | |
| | Porenformer | Form der Porenformer | Schüttdichte (kg/m3) | Zersetzungstemp. (°C) |
| Stärke | Reisstärke | länglich | | ~200 |
| | Kartoffelstärke | gerundet | 300 | |
| | Maisstärke | gerundet | | |
| | Weizenstärke | länglich | 550-700 | |
| | Maniok | länglich | | |
| Fructose | | gerundet | | 103 |
| Glucose | | | | 146 |
| Maltose | | nadelförmig | | 162,5 |
| Sacharose | | | | ab 160 |
| | | | | |

Bei Füllstoffen kommen insbesondere niedrigdehnende Füllstoffe, wie vorstehend in der Tabelle aufgelistet, in Betracht, beispielsweise Kieselsäuren. Kieselsäuren können dabei in unterschiedlichen Varianten verwendet werden, beispielsweise als Kieselsäure mit eher kompakter, aber kleiner Partikelform (Kieselsäure (1) in der vorstehenden Tabelle), oder in Form einer Kieselsäure, die eine besonders hohe Oberfläche aufweist (Kieselsäure (2) in der vorstehenden Tabelle). Verwendet werden können allgemein auch amorphe oder kristalline Füllstoffe, die selbst porös ausgebildet sind, wie beispielsweise die Füllstoffe, die vorstehend als "CoralPor" genannt sind. Dabei handelt es sich um Füllstoffen aus porös ausgebildetem Borosilikatglas. Andere Füllstoffe sind denkbar, beispielsweise Zeolithe, die porös und kristallin ausgebildet sind, oder auch andere niedrigdehnende Füllstoffe abseits von β-Eukryptit, wie beispielsweise Cordierit. Die Zugabe von Füllstoffen ist dabei auch sehr effizient in der Verbesserung der Doppelringbiegefestigkeit; bereits eine Zugabe von lediglich 1,75 Vol.-% (bezogen auf die resultierende Beschichtung) eines Füllstoffs führt zu einer Verbesserung der Festigkeit (Doppelringbiegezugfestigkeit) gegenüber einer Paste/Beschichtung ansonsten gleicher Zusammensetzung, aber ohne Füllstoff, von zwischen 12,5% und 14,5%. Verwendete Füllstoffe waren dabei die "Kieselsäure (1)", β-Eukryptit und ein CoralPor®-Füllstoff.

Bei den Blähmitteln sind allgemein anorganische und organische Blähmittel möglich, wobei organische Blähmittel bevorzugt sind, beispielsweise Zucker (Maltose, Glucose o.ä.) oder Stärken, wie auch vorstehend aufgeführt. Werden solche Blähmittel (oder auch Porenformer) zugesetzt, zeigt sich beispielsweise auch in der Festigkeit der Glasscheibe und in entsprechender Weise auch des resultierenden Verbundes neben dem positiven Einfluss auf die Farbe auch eine Verbesserung der Festigkeit (Doppelringbiegezugfestigkeit) von über 40% (Stärke als Blähmittel/Porenformer) im Vergleich zu einer Beschichtung gleicher Zusammensetzung, aber ohne Porenformer/Blähmittel, bzw. mehr als 30% (Zucker). Zugegeben wurden zur Paste dabei 10 Vol.-% Porenformer/Blähmittel. Dies führt in der Beschichtung zu 10 Vol.-% mehr Poren, als dies ohne Blähmittelzugabe der Fall wäre.

Beschreibung der Zeichnungen

Die Erfindung wird im Folgenden anhand von Figuren weiter erläutert. Es zeigen

| | |
|---|---|
| Fig. 1 | eine schematische und nicht maßstabsgetreue Darstellung eines Schnittes durch ein Verbundglas nach einer Ausführungsform, |
| Fig. | eine schematische und nicht maßstabsgetreue Darstellung einer Glasscheibe nach einer Ausführungsform, |
| Fig. 3 | eine schematische und nicht maßstabsgetreue Aufsicht auf ein Verbundglas nach einer Ausführungsform, sowie |
| Fig. 4 bis 7 | rasterelektronenmikroskopische Aufnahmen von Glasscheiben mit wenigstens einer Beschichtung in laminiertem und unlaminiertem Zustand. |

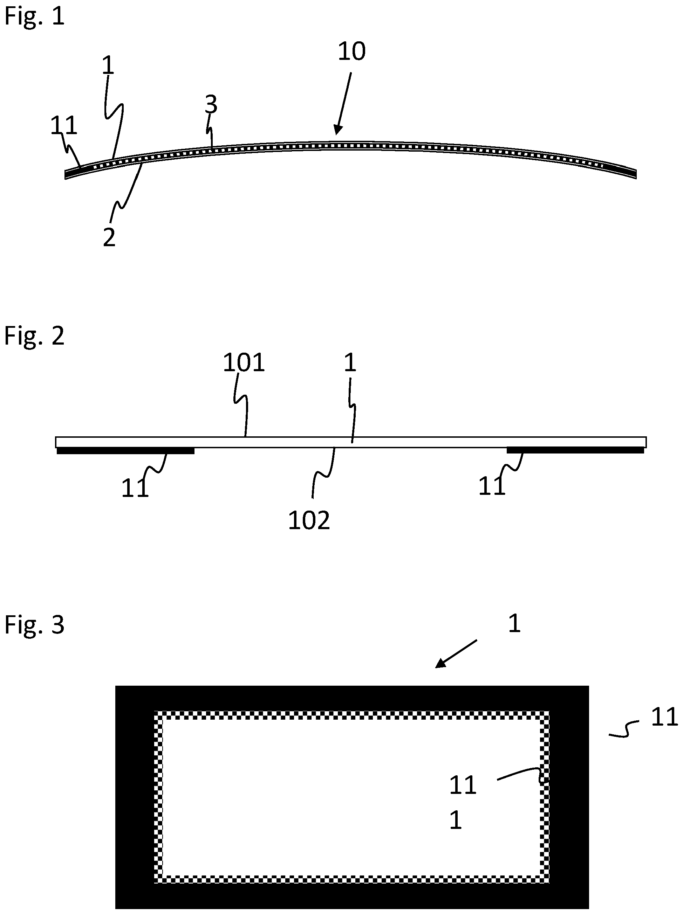

Fig. 1 ist eine schematische und nicht maßstabsgetreue Darstellung eines Verbunds bzw. eines Verbundglases 10 nach einer Ausführungsform der vorliegenden Offenbarung. Das Verbundglas 10 umfasst zwei Glasscheiben 1, 2. Scheibe 1 stellt dabei hier die wenigstens eine mit wenigstens einer bereichsweise aufgetragenen wenigstens einen Beschichtung dar. Scheibe 2 ist eine weitere Glasscheibe und kann beispielsweise aus einem Kalknatronglas ausgebildet sein. Zwischen den beiden Glasscheiben 1, 2 ist eine polymerische Lage 3 angeordnet sowie, hier im Randbereich des Verbundglases 10, die Beschichtung 11. Diese ist auf einer Seite (nicht bezeichnet) der Glasscheibe 1 angeordnet und kann jeweils im Rahmen der nachfolgenden Beschreibung die wenigstens eine Beschichtung oder die wenigstens eine Beschichtung zusammen mit gegebenenfalls einer weiteren Beschichtung als Zwischenschicht umfassen.

Aus Gründen der besseren Darstellung wurde hier die Beschichtung 11 als dick, in der Dicke also vergleichbar mit derjenigen der beiden Scheiben 1, 2 dargestellt; dies ist aber, wie ausgeführt, lediglich der besseren Darstellung geschuldet. Die Beschichtung 11 ist in der Regel deutlich dünner als jede der beiden Scheiben 1, 2 und in der Regel auch dünner als die polymerische Lage 3. Bei der polymerischen Lage 3 kann es sich auch um eine Folie handeln. Beispielhafte Dicken der polymerischen Lage liegen zwischen 650 und 850 μm, wobei die wenigstens eine Beschichtung üblicherweise Dicken im einstelligen Mikrometerbereich aufweist. Eine bevorzugte Obergrenze für die Schichtdicke der wenigstens einen Beschichtung ist beispielsweise 7 μm oder 6 μm. Weiterhin kann die wenigstens eine Beschichtung beispielsweise zwischen 3 μm und 5 μm dicke sein.

Das Verbundglas 10 ist hier, wie sichtbar, als gebogene Verbundglasscheibe ausgebildet, wie sie beispielsweise auch als Windschutzscheibe verwendet werden kann. Allgemein, ohne Beschränkung auf das in Fig. 1 dargestellte Beispiel, ist es jedoch auch möglich, dass das Verbundglas 10 keine gebogenen Scheiben 1, 2 umfasst, sondern eben ausgebildet ist. Auch ist es möglich, dass die Krümmung des Verbundglases 10 gerade umgekehrt ausgebildet ist zu der in Fig. 1 dargestellten Abbildung. Im Beispiel der Fig. 1 wäre die Glasscheibe 1 die Außenseite einer Windschutzscheibe, es ist jedoch allgemein auch möglich, dass die Glasscheibe 1 an der Innenseite einer Windschutzscheibe angeordnet ist. In jedem Fall ist allerdings die Beschichtung 3 zwischen den beiden Glasscheiben 1, 2 angeordnet.

Die Darstellung nach Fig. 1 ist dabei allerdings bevorzugt, da auf diese Weise die erste Glasscheibe 1 beispielsweise bei einer Verwendung als Windschutzscheibe Steinschlag ausgesetzt wäre oder chemischen Belastungen wie einem Salzsprühnebel, was eine Glasscheibe aus Borosilikatglas besser verträgt als beispielsweise eine handelsübliche Kalk-Natron-Glasscheibe. Wie auch weiter oben ausgeführt, kann es aber aus Kostengründen vorteilhaft sein, wenn nicht beide Scheiben des Verbundglases Borosilikatglas umfassen.

Eine Anordnung wie in Fig. 1 kann also wie ausgeführt vorteilhaft sein, da die Glasscheibe 1 als Komponenten des glasigen Materials $SiO_2$ und $B_2O_3$ umfasst. Ein solches Borosilikatglas ist kratzbeständiger als beispielsweise ein Kalk-Natron-Glas, sodass es vorteilhaft sein kann, wenn die Glasscheibe 1 wie in Fig. 1 dargestellt im Verbund 10 so ausgebildet ist, dass sie nach "außen" weist, also im Falle einer Verwendung als Windschutzscheibe nach außen weisen würde. Denn auf diese Weise wäre ein besserer Schutz vor Steinschlag und ähnlichen mechanischen Belastungen gegeben.

Zur Verdeutlichung des Aufbaus der Glasscheibe 1 nach Ausführungsformen ist diese in den Fig. 2 in Form einer schematischen und maßstabsgetreuen Abbildung dargestellt. Fig. 2 zeigt dabei eine Seitenansicht. Hier ist die Glasscheibe 1 allerdings noch nicht gebogen ausgebildet. Allgemein, ohne Beschränkung auf das in Fig. 1 gezeigte Beispiel einer Glasscheibe 1 bzw. eines Verbundglases 10, ist es auch möglich, dass die Glasscheibe gebogen vorliegt. Vorteilhaft kann es aber sein, wenn zunächst eine flache, nicht gebogene Scheibe 1 verwendet wird, welche dann später gebogen wird, und zwar beispielsweise in einem thermischen Verfahren. Auch hier ist aus Gründen der besseren Darstellung die Dicke der Beschichtung 11 deutlich größer dargestellt als in der Realität.

Die Anordnung der Scheibe 1 entspricht derjenigen in Fig. 1, wie ausgeführt mit der Ausnahme, dass die Scheibe in Fig. 2 nicht gebogen ausgeführt ist. Wie man erkennen kann, ist die Beschichtung 11 hier auf der Seite 102 ausgebildet, welche im Verbund 10 der zweite Scheibe 2 zugewandt ist. Nicht abgebildet ist hier die polymerische Lage 3, welche im Verbund zwischen der Scheibe 1 und der Scheibe 2 angeordnet ist. Es wird hier ausdrücklich darauf hingewiesen, dass die polymerische Lage 3 sowohl direkt die Seite 102 der Scheibe kontaktiert als auch auf der in dem Bereich (oder den Bereichen) der Scheibe 1 (bzw. der Seite 102 der Scheibe 1) angeordneten Beschichtung 11 angeordnet ist.

Die Beschichtung 11 ist hier im Randbereich der Scheibe 1 angeordnet, in der Darstellung der Fig. 2 jeweils links und rechts. Hier kann es beispielsweise sein, dass die Beschichtung insgesamt in Form eines "Rahmens" aufgebracht ist.

Hierzu wird auf die Fig. 3 verwiesen, welche in ebenfalls schematischer und nicht maßstabsgetreuer Abbildung eine Aufsicht auf ein Verbundglas 10 nach einer Ausführungsform zeigt. Die Beschichtung 11 ist hier als um den Rand der Scheibe 1 umlaufender Rahmen ausgebildet, wobei die Beschichtung zunächst deckend, also als Schicht ohne Unterbrechungen, ausgebildet ist, und zur Mitte der Scheibe 1 hin über ein Raster- oder Punktmuster 111 in den unbeschichteten Bereich übergeht. Dieser unbeschichtete Bereich ist für den Fall einer Verwendung der Scheibe 1 in einem Verbundglas 10 der Sichtbereich beispielsweise einer Windschutzscheibe. Selbstverständlich ist es allgemein möglich, dass der Rahmen nicht so gleichmäßig ausgebildet ist wie schematisch in Fig. 3 dargestellt, sondern beispielsweise Ausbuchtungen aufweist, wie dies beispielsweise bei den Windschutzscheiben im Bereich der Rückspiegel häufig der Fall ist.

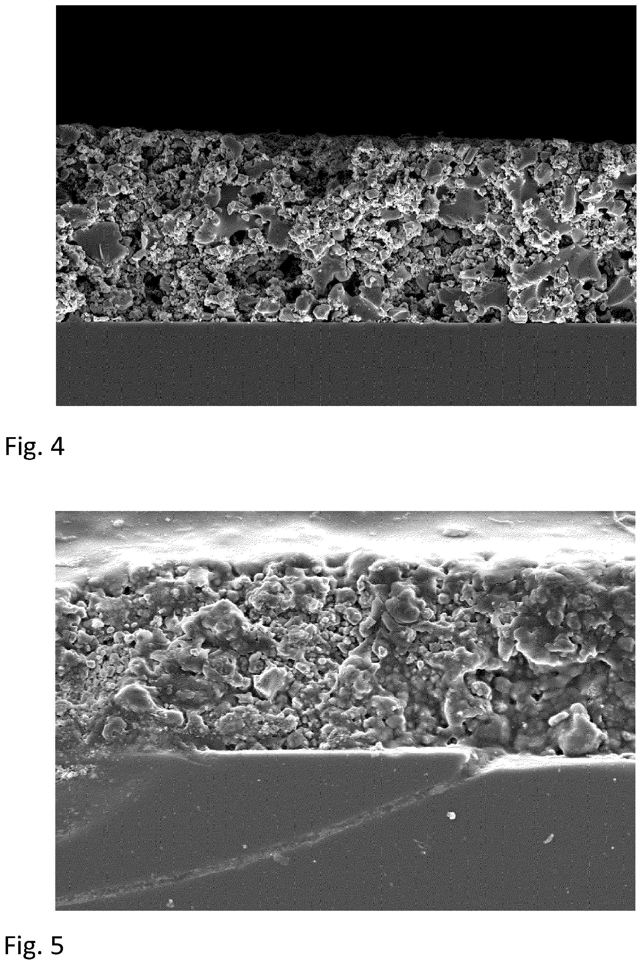

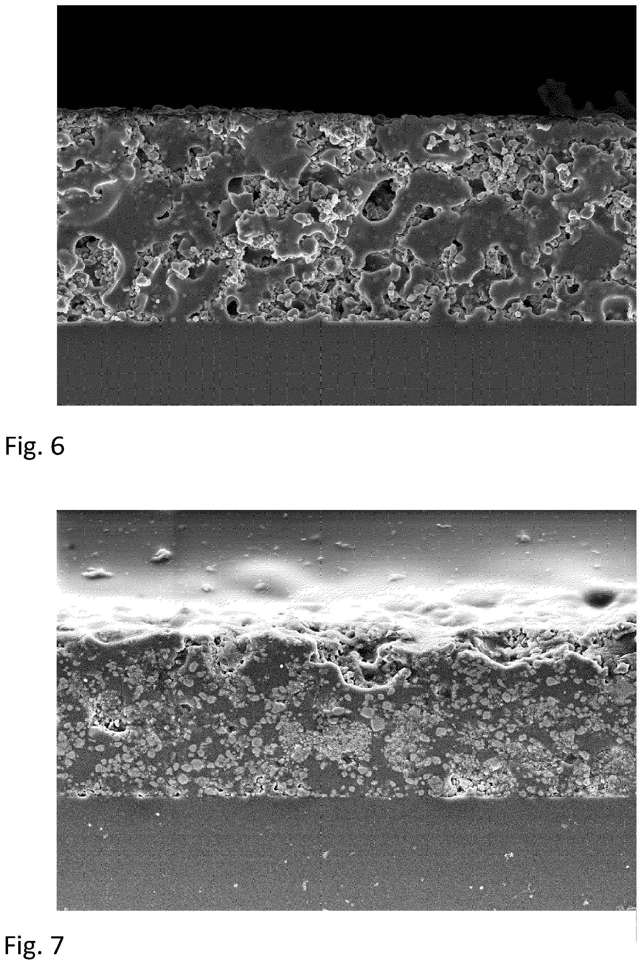

Fig. 4 und 6 sind rasterelektronenmikroskopische Aufnahmen von bereichsweise beschichteten Glasscheiben umfassend ein Glas umfassend $SiO_2$ und $B_2O_3$, die eine erste und eine zweite Seite aufweisen, nach Ausführungsformen der Offenbarung ist.

Die Beschichtung ist hier allgemein eine in wenigstens einem Bereich der zweiten Seite der Glasscheibe aufgetragene wenigstens eine Beschichtung. Sie ist allgemein als Emaillebeschichtung umfassend wenigstens ein Pigment, einen glasigen Bestandteil und vorzugsweise wenigstens einen Zusatzstoff, beispielsweise einen Füllstoff, ausgebildet.

Wie man sieht, umfassend die wenigstens eine Beschichtung Poren, vorzugsweise offene Poren, wie man der Darstellung der Figuren 4 und 6 entnehmen kann. Daher resultiert hier vorzugsweise in der wenigstens einen Beschichtung eine direkte Verbindung zwischen einer der zweiten Seite der wenigstens einen Glasscheibe zugewandten Seite der wenigstens eine Beschichtung und einer der zweiten Seite der wenigstens einen Glasscheibe abgewandten Seite der wenigstens einen Beschichtung.

Wie man den Darstellungen der laminierten Proben in Fig. 5 und 7 (wobei Fig. 5 die laminierte Probe der Fig. 4 und Fig.7 die laminierte Probe der Fig. 6 ist) entnehmen kann, infiltriert im Laminationsprozess die polymerische Lage die Poren der wenigstens einen Beschichtung zumindest teilweise auf.


Bezugszeichenliste

| 1 | Glasscheibe |
|---|---|
| 10 | Verbund, Verbundscheibe |
| 11 | Beschichtung |
| 101, 102 | Seiten der Glasscheibe |
| 111 | Punktraster |
| 2 | Weitere Glasscheibe |
| 3 | Polymerische Lage |

**Patentansprüche**

1. Verbundglas, insbesondere für ein Fahrzeug, umfassend zwei Glasscheiben, wobei wenigstens eine Glasscheibe eine bereichsweise beschichtete Glasscheibe umfassend ein Glas umfassend $SiO_2$ und $B_2O_3$, ist, die eine erste und eine zweite Seite aufweist,

   wenigstens eine in wenigstens einem Bereich der zweiten Seite der wenigstens einen Glasscheibe aufgetragene wenigstens eine Beschichtung,
   wobei die wenigstens eine Beschichtung als Emaillebeschichtung umfassend wenigstens ein Pigment, einen glasigen Bestandteil und vorzugsweise wenigstens einen Zusatzstoff, insbesondere einen Füllstoff, ausgebildet ist,
   wobei die wenigstens eine Beschichtung Poren umfasst, vorzugsweise offene Poren, sodass in der wenigstens einen Beschichtung vorzugsweise eine direkte Verbindung zwischen einer der zweiten Seite der wenigstens einen Glasscheibe zugewandten Seite der wenigstens eine Beschichtung und einer der zweiten Seite der wenigstens einen Glasscheibe abgewandten Seite der wenigstens einen Beschichtung resultieren,
   wobei die wenigstens eine Glasscheibe vorzugsweise eine Biegefestigkeit zwischen wenigstens 5 und höchstens 170 MPa, bevorzugt wenigstens 20 und höchstens 170 MPa, besonders bevorzugt wenigstens 35 MPa, ganz besonders bevorzugt wenigstens 60 MPa, und am meisten bevorzugt wenigstens 80 MPa, aufweist,
   weiter umfassend wenigstens eine zwischen den Glasscheiben angeordnete polymerische Lage, wobei ein Polymer der polymerischen Lage ungefärbt vorliegt, und wobei im Bereich der wenigstens einen Beschichtung zumindest ein Teil der polymerischen Lage die Poren der wenigstens einen Beschichtung zumindest teilweise ausfüllt,
   sodass ein Farbort des Verbundglases, bestimmt in Betrachtungsrichtung von der ersten zur zweiten Seite der wenigstens einen Glasscheibe in dem wenigstens einen Bereich, in dem auf der zweiten Seite der wenigstens einen Glasscheibe die wenigstens eine Beschichtung aufgetragen ist, gegeben im CIEL*a*b*-System resultiert, wobei L* höchstens 12 ist und vorzugsweise wenigstens 1, und a* und b* jeweils im Bereich zwischen +5 und -5 liegen.

2. Verbundglas nach Anspruch 1, wobei die Lichttransmission, $\tau_{vis}$, bestimmt in dem wenigstens einen Bereich, weniger als 5 % ist, bevorzugt weniger als 2%, besonders bevorzugt weniger als 1% und besonders bevorzugt weniger als 0,5%.

3. Verbundglas nach einem der Ansprüche 1 oder 2, aufweisend wenigstens eines der folgenden Merkmale:

   - Der Pigmentgehalt der wenigstens einen Beschichtung liegt zwischen 1 Vol.-% und 40 Vol.-%, bevorzugt bei weniger als 37,5 Vol.-%, wobei allgemein eine bevorzugte Untergrenze bei 5 Vol.% liegt,
   - Der Gehalt der wenigstens einen Beschichtung an glasigem Bestandteil liegt, bezogen auf den Feststoffgehalt der wenigstens einen Beschichtung, zwischen 60 Vol.-% und 95 Vol.-%.

4. Verbundglas nach einem der Ansprüche 1 bis 3, wobei der glasige Bestandteil der wenigstens einen Beschichtung umfasst, gegeben in Gew.-% auf Oxidbasis:

   $SiO_2$     10 bis 70

(fortgesetzt)

| | |
|---|---|
| $B_2O_3$ | 5 bis 30, bevorzugt 6 bis 25 |

5. Verbundglas nach Anspruch 4, wobei der glasige Bestandteil der wenigstens einen Beschichtung, in Gew.-% auf Oxid-Basis, umfasst:

| | |
|---|---|
| $SiO_2$ | 10 bis 50 |
| $B_2O_3$ | 10 bis 26 |
| ZnO | 20 bis 50, |

wobei vorzugsweise die Summe der Alkalioxide zwischen kleiner 0,5 Gew.-% und 10 Gew.-% liegt und/oder die Summe der Erdalkalioxide zwischen 0 Gew.-% und 2,5 Gew.-% liegt.
oder

| | |
|---|---|
| $SiO_2$ | 30 bis 60 |
| $B_2O_3$ | 15 bis 25 |
| $Bi_2O_3$ | 8 bis 45, |

wobei vorzugsweise die Summe der Alkalioxide zwischen 3,5 Gew.-% und 8,5 Gew.-% liegt, insbesondere vorzugsweise zwischen 4 Gew.-% und 8 Gew.-% liegt und/oder die Summe der Erdalkalioxide 0,5 Gew.-% oder weniger beträgt,
oder

| | |
|---|---|
| $SiO_2$ | 50 bis 70 |
| $B_2O_3$ | 15 bis 30 |
| $Bi_2O_3$ | 0 bis 15 |
| ZnO | 0 bis 5, |

wobei vorzugsweise die Summe der Alkalioxide zwischen 4 und 6,5 Gew.-% liegt und/oder die Summe der Erdalkalioxide zwischen 0 und 2,5 Gew.-% liegt.

6. Verbundglas nach einem der Ansprüche 1 bis 5, wobei die wenigstens eine Beschichtung einen als Füllstoff ausgebildeten Zusatzstoff umfasst, wobei der Füllstoff bevorzugt einen linearen thermischen Ausdehnungskoeffizienten zwischen $-7*10^{-6}$/K und $1,5*10^{-6}$/K aufweist.

7. Verbundglas nach einem der Ansprüche 1 bis 5, wobei die wenigstens eine Beschichtung einen als Füllstoff ausgebildeten Zusatzstoff umfasst, dessen Gehalt zwischen 0,5 Vol.-% und 20 Vol.-% liegt, bevorzugt weniger als 15 Vol.-%.

8. Verbundglas nach einem der Ansprüche 1 bis 7, wobei die wenigstens eine Glasscheibe wenigstens 60 Gew.-% und höchstens 85 Gew.-% $SiO_2$, wenigstens 8 Gew.-% und höchstens 26 Gew.-% $B_2O_3$, wenigstens 0,5 Gew.-% und höchstens 12 Gew.-% $Al_2O_3$ und wenigstens 0,5 Gew.-% und höchstens 6 Gew.-% $Na_2O$ umfasst, wobei bevorzugt weiterhin umfasst sein können bis zu 1 Gew.-% $Li_2O$, bis zu 4 Gew.-% $K_2O$, bis zu 5 Gew.-% MgO, bis zu 3,5 Gew.-% CaO, bis zu 4 Gew.-% SrO, bis zu 3 Gew.-% ZnO, bis zu 3 Gew.-% $ZrO_2$, sowie weiterhin Nebenbestandteile, wie beispielsweise Läutermittel, wobei die Summe dieser Nebenbestandteile nicht mehr als 2 Gew.-% beträgt.

9. Verbundglas nach einem der Ansprüche 1 bis 8, wobei die weitere Glasscheibe ein Kalk-Natron-Glas umfasst oder aus einem solchen besteht.

10. Verbundglas nach einem der Ansprüche 1 bis 9, aufweisend ein Ergebnis von wenigstens 3 in einem sogenannten Pummel-Test.

Fig. 1

Fig. 2

Fig. 3

Fig. 4

Fig. 5

Fig. 6

Fig. 7

# EUROPÄISCHER RECHERCHENBERICHT

**Nummer der Anmeldung**

EP 24 17 5139

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | WO 2023/224799 A1 (CORNING INC [US]) 23. November 2023 (2023-11-23) * Absatz [0098] - Absatz [0127] * * Absatz [0143] - Absatz [0148] * * Absatz [0163] - Absatz [0164] * ----- | 1-10 | INV. B32B17/10 C03C3/091 C03C17/04 C03C8/14 B60J1/02 |
| T | EP 4 166 519 A1 (SCHOTT AG [DE]; SCHOTT TECHNICAL GLASS SOLUTIONS GMBH [DE]) 19. April 2023 (2023-04-19) * Absatz [0016] - Absatz [0027] * * Absatz [0138] - Absatz [0154] * ----- | | |

**RECHERCHIERTE SACHGEBIETE (IPC)**

B32B
B60J
C03C
G02B

Der vorliegende Recherchenbericht wurde für alle Patentansprüche erstellt

| Recherchenort | Abschlußdatum der Recherche | Prüfer |
|---|---|---|
| Den Haag | 18. September 2024 | Lichau, Holger |

**ANHANG ZUM EUROPÄISCHEN RECHERCHENBERICHT**
**ÜBER DIE EUROPÄISCHE PATENTANMELDUNG NR.**

EP 24 17 5139

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2024

| Im Recherchenbericht angeführtes Patentdokument | Datum der Veröffentlichung | Mitglied(er) der Patentfamilie | Datum der Veröffentlichung |
|---|---|---|---|
| WO 2023224799 A1 | 23-11-2023 | TW 202404922 A | 01-02-2024 |
| | | WO 2023224799 A1 | 23-11-2023 |
| EP 4166519 A1 | 19-04-2023 | CN 115974420 A | 18-04-2023 |
| | | EP 4166519 A1 | 19-04-2023 |
| | | PE 20230744 A1 | 05-05-2023 |
| | | US 2023123130 A1 | 20-04-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015059406 A
- WO 2017157660 A1
- WO 20170005596 A1
- WO 2019130285 A1
- WO 2018122769 A1